# EUROPEAN PATENT APPLICATION

(11) **EP 3 318 539 A1**
(43) Date of publication of application: **09.05.2018**
(21) Application number: 16197061.1
(22) Date of filing: 03.11.2016
(51) Int. Cl.: C04B 28/14

(54) **GYPSUM CONSTRUCTION MATERIALS**

(71) Applicant: Nederlandse Organisatie voor toegepast- natuurwetenschappelijk onderzoek TNO, 2595 DA 's-Gravenhage (NL)
(72) Inventor: VALCKE, Siska Lisa Albertine, 2595 DA 's Gravenhage (NL); VAN ZUNDERT, Kim, 2595 DA 's Gravenhage (NL); DONKERVOORT, Derk Rogier, 2595 DA 's Gravenhage (NL); NIJLAND, Teunis Gerrit, 2595 DA 's Gravenhage (NL)
(74) Representative: V.O.

(57) **Abstract**

In accordance with the invention there is provided a compacted gypsum product having a density of less than 1800 kg/m³. The products of the invention can be made by a process for preparing a compacted gypsum product, which process comprises preparing a mixture comprising raw gypsum and an aggregate having a lower density than said compacted pure gypsum, followed by compacting said mixture.

The products of the present invention have a low density (high porosity), while their mechanical strength is sufficiently high for construction purposes, in particular for the construction of internal, non-loadbearing walls in buildings.

## Description

### BACKGROUND OF THE INVENTION

The invention is in the field of construction materials. More in particular the invention relates to gypsum products which can be used as construction materials, such as building blocks, as well as to a method for manufacturing these.

Gypsum blocks for the building and construction industry are currently cast and applied in non-load-bearing applications. Compacted gypsum has been explored as an alternative to cast gypsum.

Cast gypsum is typically produced from raw gypsum (calcium sulfate dihydrate) material by a process comprising the steps of calcination at 120-180 °C during typically about one hour. This converts the gypsum into its hemihydrate (CaSO₄ ·*n*H₂O, where 0.5 ≤ *n* ≤ 0.8). This is followed by grinding and optionally mixing with additives. By subsequent mixing with water, typically at ambient temperatures, it is converted to the dihydrate form (CaSO₄ ·2H₂O). This reaction is exothermic. The mixture can be cast into various shapes including sheets for drywall. Drying is typically carried out for about 30-50 h.

Compacted gypsum on the other hand, can be made from the same raw gypsum dihydrate with low percentages of free water, by molding, compaction and curing. The technique of compacting gypsum is based on the fact that calcium sulfate dihydrate can be compacted under a minimum compaction pressure to form a coherent material. In this technique, no prior calcination of the gypsum is needed, in contrast to the traditional technique of casting calcined gypsum-water mixes.

The term "gypsum" as used herein refers to both natural (mined) gypsum and synthetic gypsum, in particular synthetic flue gas desulfurization (FGD) gypsum, which is a synthetic product derived from FGD systems, which are for instance operated at electric power plants. Both types of gypsum predominantly comprise the dihydrate form of gypsum.

US2008250982 discloses gypsum parts that are obtained by mixing calcium dihydrate and hemihydrate followed by compression. Low-density blocks of acceptable compressive strength are not disclosed or suggested.

An object of the present invention is to provide a light weight compacted gypsum product having a compressive strength that is sufficiently high to use these products in buildings, preferably having a density comparable to that of cast gypsum products.

### BRIEF SUMMARY OF THE INVENTION

The present invention provides a technology for increasing strength of compacted gypsum at relatively low compaction pressures. As a result, compacted gypsum with a lower density can be obtained as compared to traditional compaction processes. Based on this, eventually a lightweight product can be designed having a compressive strength that is sufficiently high to use these products in buildings, preferably having a low density, comparable to that of cast gypsum products. A further object is to provide a compaction process for obtaining such lightweight compacted gypsum products.

It was found that the above mentioned objectives can be met, at least in part by mixing a low-density material with the raw gypsum material and subjecting the mixture to a compaction process.

In accordance with the invention there is provided a compacted gypsum product having a density of less than 1800 kg/m³. The products of the invention can be made by a process for preparing a compacted gypsum product, which process comprises preparing a mixture comprising raw gypsum and an aggregate having a lower density than said compacted pure gypsum, followed by compacting said mixture.

The products of the present invention have a low density (high porosity), while their mechanical strength is sufficiently high for construction purposes, in particular for the construction of internal, non-loadbearing walls in buildings.

### BRIEF DESCRIPTION OF THE DRAWINGS

Figure 1 shows a graph of the relationship between compressive strength and porosity for compacted gypsum and cast hemihydrate gypsum.
Figures 2A-C is a schematic representation concept underlying the present invention.

### DETAILED DESCRIPTION OF THE INVENTION

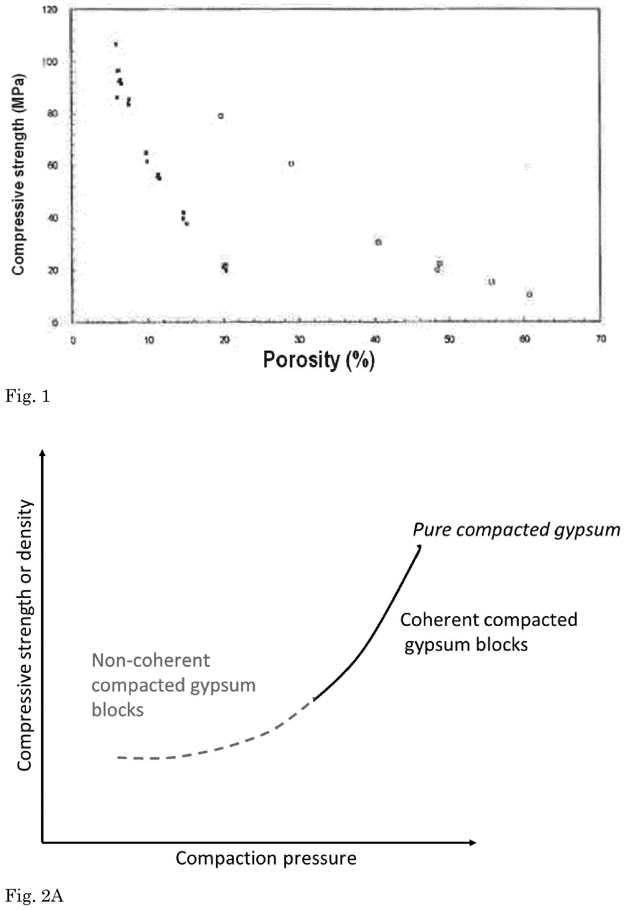

Important properties for the gypsum building materials of the present invention are strength, porosity and density, as well as their correlation. For compacted gypsum the correlations between these properties are not exactly the same as for cast gypsum. Compaction pressure has been found to be a process variable with a large impact on these properties. Several studies have been focusing on high compaction pressures, as the compacted gypsum product can reach very high strengths making it potentially interesting for load-bearing applications. However, at low compaction pressures, compacted gypsum typically has a lower strength than cast gypsum for the same porosity levels, as illustrated in figure 1: the black dots refer to compacted FGD gypsum and the open circles to cast hemihydrate form FGD gypsum. This is believed to be related to a different microstructure (see Stoop et al. "Compaction of FGD-gypsum"; ZKG International 3 (1996) 158-164).

For some types of building elements a high density (*viz.* a low porosity) is considered disadvantageous in terms of ergonomics, *viz*. these blocks may be too heavy to be handled by construction workers. In other words, for high density materials only relatively small or thin elements can be used to avoid excessive weight. This leads to a decrease in efficiency. Also transport of heavier elements results in increased costs and environmental impact for transport.

The density of compacted gypsum blocks primarily depends on the density of the starting materials if other materials than gypsum are added to the mix and the compaction pressure.

In the investigations leading to the present invention the following approach was chosen.

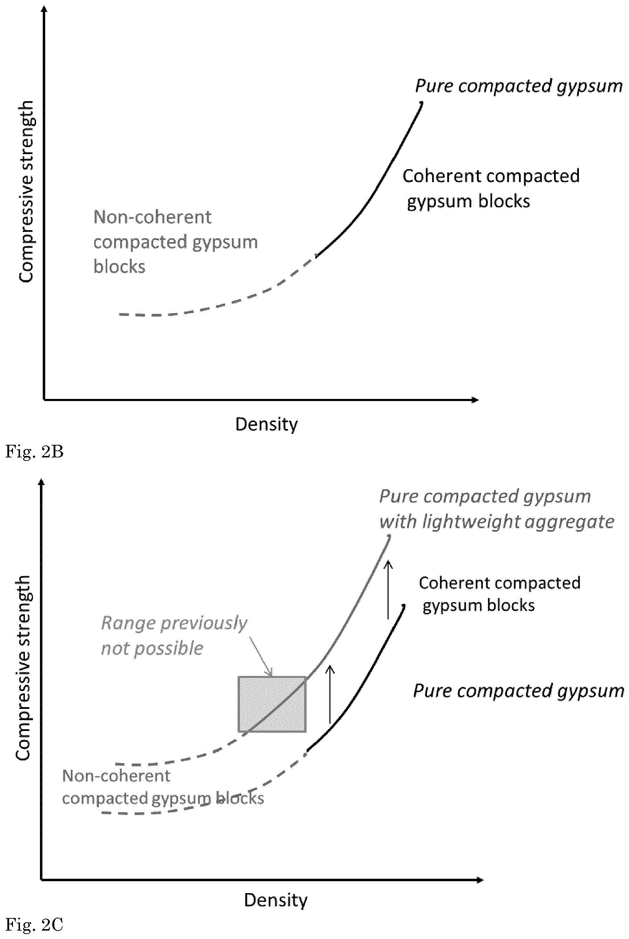

First, the lowest possible compaction pressure resulting in coherent products (*i.e*. products which could be taken out of the mold without falling apart), was investigated. This was done by varying the amount of the starting material compacted to a fixed volume. This results in different densities. In this way the compaction pressure was determined below which the relation between compaction pressure, density and compressive strength could not be defined, see figure 2A and 2B.

Subsequently, aggregates with a low density (compared to the pure compacted gypsum) were added as a partial gypsum replacement, which resulted in products with higher compressive strength for a specific density (when the total mass of aggregate and gypsum per compacted volume is kept constant).

Then, the compaction pressure was lowered again, in search of lowering the minimum compaction pressure for obtaining coherent samples with lower mass per compacted volume (lower densities).

It was found that adding lightweight aggregate to the gypsum resulted in an increase in compressive strength of 5 MPa or more in comparison with compacted gypsum without adding any aggregates (for a specific density). Suitable aggregate materials in this respect are expanded clay (laterlite) having densities of typically 0.3-0.5 g/cm³ or natural lightweight minerals, such as pumice (open porous volcanic glass), with a density of 0.2-0.3 g/cm³. Other suitable aggregate materials are open porous synthetic expanded glass and the like. Preferably the loose bulk densities of the aggregate materials range between 150-450 kg/m³, more preferably 200-400 kg/m³.

An increase of at least 10 MPa in compressive strength is also feasible by use of starting gypsum other than FGD.

The materials of the present invention preferably have a compressive strength of 5 MPa or more, preferably 10 MPa or more.

Figures 2A-C graphically illustrate the above.

FGD gypsum is the preferred starting material for the present invention. It is preferred to be able to use the FGD gypsum with its intrinsic moisture content, *i.e*. without having to dry it first. This intrinsic moisture content is preferably 5-10 wt.%, more preferably about 7-8 wt.%.

Compacted blocks of the present invention, while having a low density are still suitable for constructive purposes, despite the fact that compaction of pure gypsum leads to products with an intrinsic higher density.

Without wishing to be bound by theory, it is believed that the effect of the addition of the lightweight aggregate is twofold. Because the aggregate takes more space and in addition brings air by replacing the same weight of gypsum in the compacted volume, the space left for the gypsum material is decreased. In other words, the local pressure between the raw gypsum particles in the matrix is effectively higher than in the samples with the same mass per compacted volume of pure gypsum without aggregate. Therefore, this results in higher compression strengths per density and it should be possible to produce stronger and coherent compacted gypsum blocks at lower densities.

Up to now, compacted gypsum blocks, coherent and with acceptable compressive strength could only be produced above a density of about 1700-1800 kg/m³. This is considerably higher than desired by current standards for gypsum blocks.

The concept of increasing strength by the use of strong but voluminous (*i.e*. low density) materials as an aggregate, whilst maintaining a constant total mass per compacted volume of the raw materials (*i.e*. mass of raw gypsum + aggregate in the fixed compacted volume = mass of raw gypsum in the fixed compacted volume of the existing technology), thus enabling the use of lower density blocks, is new.

The gypsum product of the present invention is light-weight. For practical purposes this means that it has a density of less than 1800 kg/m³, preferably a density of less than 1700 kg/m³, preferably of less than 1650 kg/m³. Preferably the density is more than 1200 kg/m³, more preferably more than 1400 kg/m³, for instance about 1500 kg/m³.

Density as used herein is a material property. An object made from the materials of the present invention may have a weight per unit volume that is lower than the material's density if it contains voids, for instance if the object is in the form of a hollow block.

Higher densities corresponds to objects having a high compressive strength. For instance, with a density of more than 1500 kg/m³ a compressive strength of 5 MPa or more, preferably more than 10 MPa can be obtained. Compressive strengths of up to 20 MPa or more can be achieved.

The process for preparing the gypsum materials of the present invention comprises preparing a mixture comprising raw gypsum and an aggregate material having a lower density than said compacted raw gypsum, followed by compacting said mixture. During the compaction process the product's volume may decrease considerably, for instance up to about 50%. Optionally, the compaction process may be carried out in different steps, for instance by applying an initial pre-compaction step using relatively simple equipment and in a subsequent step using equipment that can realize the high forces that are required for the final compaction.

The compaction can be carried out in one direction or in multiple directions.

Parameters that influence the product's quality are compaction pressure, which is preferably from 1 to 40 MPa and compression time, which ranges typically from 10-60 seconds, preferably from 20-50 seconds, e.g. about 30 seconds.

The aggregate material that is added has a density that is less than compacted gypsum itself, resulting in a product having a lower density than pure compacted gypsum.

The aggregate materials may be added as a single compound or as a combination of different compounds.

The amount of aggregate material added is preferably 8 to 22 wt.% based on the weight of the mixture.

The product obtained by the process of the invention has the unique properties outlined above. These properties make them very suitable for use in construction, in particular in the construction of non load-bearing structures.

Advantages of the present invention in comparison with casted gypsum materials are considerable savings in energy consumption and preparation time for the production. Energy savings are related to the absence of a calcination step and much lower (or no) drying time. As a result, the production costs are relatively low. The following table illustrates the differences between the production using compaction and casting in terms of (primary) energy use, energy costs and CO₂ emissions.

**Table 1. Comparison of energy use, energy costs and CO₂ emissions for a casted and compacted block, both measuring 640 mm × 501 mm × 70 mm**

| | **Casted block** | **Compacted block** | **Difference** |
|---|---|---|---|
| **Primary energy (MJ)** | 31.8 | 1.5 | -95,3 % |
| **Energy costs** | 18.2 | 2.5 | -86.2 % |
| **CO₂ (kg)** | 2.23 | 0.29 | -87.0 % |

Table 1 shows that the production method of compaction holds a strong advantage over casting, the savings in energy, energy related costs and CO₂ lie in the order of 90%. It is estimated that savings in the overall production costs may be as high as 17-80 %, depending on the type and speed of operation, *e.g*. parallel and perpendicular compaction, as well as different speeds of opening and closing of the press.

Next to energy savings, other sustainability related aspects may lead to cost savings, such as lower water usage, use of recycled gypsum.

The present invention can be used for a variety of construction purposes, such as alternatives for currently casted gypsum building products (FGD or synthetic) and/or natural gypsum, for instance for non load-bearing inner wall blocks, gypsum wall and floor boards, load bearing building products and the like; alternatives for currently casted products based on phosphogypsum, *e.g*. roof tiles, and the like.

The present invention is particularly favorable because it does not rely on a calcination step of the gypsum raw material.

The invention will now be illustrated by the following nonlimiting examples. Unless stated otherwise, all percentages are based on mass.

### Examples

The compaction pressure for pure gypsum was varied to determine the lowest pressures resulting in a coherent product with a certain compressive strength. A product was considered coherent when it could be taken out of the mold without falling apart. First, different types of pure gypsum were used without aggregate or additives. In a later stage, experiments with gypsum and aggregate were performed.

Three types of gypsum were used as raw materials:
1) FGD type 1;
2) FGD type 2, a finer powder than FGD type 1. 4, 6 and 10 % water was added to the mix to enable compaction, but also to allow for hydration of small amounts of anhydrite/hemihydrate present in the (uncalcined) FGD gypsum. The optimum amount of water was determined empirically by making trial samples for mixing and discarding samples with excess water. The water was sprayed on to the gypsum before mixing by hand for approximately 1 minute.
3) Natural gypsum was used in a non-dried form, *i.e*. with quarry water (about 4 wt.%).

Compaction was performed using a hydraulic press (Toni Techniek) with a maximum force of 400 kN. Experiments were performed using a high-tensile steel cylindrical mold with a diameter of 53 mm and a net height of 97 mm (total height of 100 mm). The resulting volume was 0.214 dm³. The distance of movement of the press was kept fixed to obtain compacted heights of 30 mm; the velocity was set at 10 mm/min. The pressure was maintained for 1 minute after reaching the fixed height. This resulted in fixed cylindrical product dimensions with a diameter of 53 mm and a height of 30 mm. The amount of base material (by mass) was varied from 125 - 90 grams in steps of 5 grams. At weights lower than 90 grams, the samples would not longer hold together when releasing them from the mold. By preparing samples this way, different compaction pressures were built up for each weight per compacted volume. As such, eight sets of samples with different compaction pressures were created. For each weight fixed, a set of triplicate samples was made.

There is an optimum for the amount of free water in the gypsum powder before compaction. In the higher compaction pressure range, optimum levels are around 3 wt.%, while in the lower compaction level range, percentages around 6-7 wt.% are optimal. Higher percentages result in the expulsion of water from the sample during compaction.

The moisture content of the source material was determined by placing 3 samples of raw material into a drying cabinet at 40 °C and drying it until constant mass. The moisture content amounted to about 7 to 8 wt.%. As this moisture content of the original material lies close to what is previously determined as optimal, the FGD gypsum was were not dried prior to compaction.

A Teflon™ lubricant (PTFE spray van E-Coll) was used to reduce the influence of friction at the mold edges. The lubricant was applied every two or three samples, as soon as the skin of the specimens appeared to be damaged when releasing it from the mold.

A Teflon plate with a diameter 52.93 mm and a thickness of 3 mm, was used to place between the material and the press to equal the pressure during the compaction process.

There was found to be a consistent relation between the amount of material per compacted volume (density) and the pressure build up during compaction (compaction pressure). This relation steepens at higher densities.

The compaction pressures reached in the investigation of the lowest feasible densities range from 1 to 40 MPa, related to densities of the compacted pure gypsum (*i.e*. without addition of aggregate) of 1200 - 1700 kg/m³. The lowest density at which a coherent sample could be released from the mold without damage, was reached around 1200 kg/m³ with a compaction pressure around 1 MPa.

In accordance with the invention the compaction pressure and compressive strength was increased for samples with particular (low) densities by adding aggregate.

The same compaction procedure as described above was used. To evaluate the effect of incorporation of relatively low density porous aggregates on the density of gypsum blocks, part of the gypsum was replaced by the same mass of aggregate whilst maintaining a fixed compacted volume. Because the aggregate takes more space and brings in additional air for the same weight of gypsum in the compacted volume, this decreases the space left for the gypsum material. In other words, the local pressure between the raw gypsum particles in the matrix is effectively higher than in the samples with the same mass per compacted volume of pure gypsum without aggregate. Therefore, this results in higher compression strengths per density and it should be possible to produce stronger and coherent compacted gypsum blocks at lower densities.

This approach produces samples that have the same density, but a higher compaction pressure resulting in higher compressive strengths.

Samples were made by preparing 125 g FGD gypsum as the raw gypsum (1700 kg/m³) and replacing different weight percentages thereof by aggregate having a lower density than the compacted gypsum.

The following lightweight aggregate types were used.
i) Expanded clay, so-called Laterlite 3/8. These were rounded near spherical particles that cannot be squeezed or crumbled by hand. The material has a nominal grain size 4-10 mm, but only the sieve fraction of 3-7 mm (maximum 7.3 mm) was used. The loose bulk density is 350 kg/m³. The aggregate was used dry as is, *i.e*. without pre-drying.
ii) Expanded clay, so-called Laterlite 2/3. These were rounded near spherical particles that cannot be squeezed or crumbled by hand. The material had a nominal grain size of 1-5 mm, but only the sieve fraction 2-3 mm was used. The loose bulk density is 440 kg/m³. The aggregate was dried by 40 °C to constant weight because it contained too much moisture to be used directly.
iii) Pumice: open, porous volcanic glass, angular particles absorbing water that cannot be squeezed but to some extent crumbled. The material is sold under the name Rotocell™ and has a grain size of 2-4 mm, bulk density of 290 kg/m³, particle crushing strength 12 Nmm². The aggregate was used dry as is, *i.e*. without pre-drying.
iv) Poraver: synthetic spherical expanded glass, open and porous, that cannot be squeezed or crumbled by hand, used in two grain size fractions: small and big, corresponding to 0.1-0.3 and 2-4 mm, respectively. Bulk densities are 400 ± 60 and 190 ± 20 kg m-3, particle density 950 ± 150 and 320 ± 40 kg m-3, particle crushing resistance 2.8 and 1.4 N mm-2, and water absorption 33 vol.% (35 wt.%) and 4.5 vol.% (15 wt.%), respectively. The material was used dry as is, *i.e*. without pre-drying.

Aggregates and raw gypsum were mixed in a paper basket for 2-4 minutes. Any additional water was added and mixed for several minutes until a homogeneous mixture was obtained.

The following results were obtained.

**Table 2**

| Sample nr. | Total amount material | Type base material | Type aggegrate/ addetive | Ratio | density | Compacting pressure | Compressive strength |
|---|---|---|---|---|---|---|---|
| [-] | [gr] | | | | [kg/m³] | [MPa] | [MPa] |
| 54 | 125 | FGD-spheres | laterlite 3/8 | 8 | 1721 | 53.35 | 12.87 |
| 55 | 125 | FGD-spheres | laterlite 3/8 | 10 | 1716 | 59.99 | 13.14 |
| 56 | 125 | FGD-spheres | laterlite 3/8 | 16 | 1709 | 73.47 | 13.60 |
| 57 | 110 | FGD-spheres | laterlite 3/8 | 8 | 1545 | 25.09 | 6.53 |
| 58 | 110 | FGD-spheres | laterlite 3/8 | 10 | 1544 | 26.71 | 6.39 |
| 59 | 110 | FGD-spheres | laterlite 3/8 | 16 | 1532 | 37.93 | 7.66 |
| 61 | 100 | FGD-spheres | laterlite 3/8 | 10 | 1406 | 16.91 | 2.70 |
| 62 | 100 | FGD-spheres | laterlite 3/8 | 16 | 1396 | 23.28 | 5.03 |
| 64 | 90 | FGD-spheres | laterlite 3/8 | 16 | 1295 | 12.66 | 2.37 |
| 67 | 90 | FGD-spheres | laterlite 3/8 | 18 | 1231 | 11.60 | 2.03 |
| 68 | 90 | FGD-spheres | laterlite 3/8 | 20 | 1232 | 14.30 | 2.02 |
| 69 | 90 | FGD-spheres | laterlite 3/8 | 22 | 1230 | 16.67 | 2.09 |
| 70 | 95 | FGD-spheres | laterlite 3/8 | 16 | 1296 | 16.50 | 2.02 |
| 71 | 95 | FGD-spheres | laterlite 3/8 | 18 | 1298 | 17.93 | 2.94 |
| 72 | 95 | FGD-spheres | laterlite 3/8 | 20 | 1295 | 19.03 | 2.89 |
| 73 | 95 | FGD-spheres | laterlite 3/8 | 22 | 1298 | 21.51 | 3.99 |
| 74 | 100 | FGD-spheres | laterlite 3/8 | 20 | 1374 | 25.76 | 4.01 |

**Table 3**

| Sample nr. | Total amount material | Type base material | Type aggegrate/ addetive | Ratio | density | Compacting pressure | Compressive strength |
|---|---|---|---|---|---|---|---|
| [-] | [gr] | | | | [kg/m³] | [MPa] | [MPa] |
| 129 | 110 | FGD-spheres | laterlite 2/3 | 16 | 1472 | 32.63 | 4.95 |
| 130 | 110 | FGD-spheres | laterlite 2/3 | 18 | 1485 | 35.36 | 5.24 |
| 131 | 110 | FGD-spheres | laterlite 2/3 | 22 | 1488 | 39.95 | 6.62 |

**Table 4**

| Sample nr. | Total amount material | Type base material | Type aggegrate/ addetive | Ratio | density | Compacting pressure | Compressive strength |
|---|---|---|---|---|---|---|---|
| [-] | [gr] | | | | [kg/m³] | [MPa] | [MPa] |
| 126 | 110 | FGD-spheres | pumice | 16 | 1480 | 32.33 | 5.92 |
| 127 | 110 | FGD-spheres | pumice | 18 | 1470 | 35.21 | 6.05 |
| 128 | 110 | FGD-spheres | pumice | 22 | 1466 | 40.11 | 6.99 |

**Table 5**

| Sample nr. | Total amount material | Type base material | Type aggegrate/ addetive | Ratio | density | Compacting pressure | Compressive strength |
|---|---|---|---|---|---|---|---|
| [-] | [gr] | | | | [kg/m³] | [MPa] | [MPa] |
| 140 | 110 | FGD-spheres | poraver small | 16 | 1467 | 28.71 | 5.24 |
| 141 | 125 | FGD-spheres | poraver small | 16 | 1635 | 58.93 | 10.71 |
| 142 | 110 | FGD-spheres | poraver large | 7 | 1458 | 22.75 | 2.28 |
| 143 | 110 | FGD-spheres | poraver large | 15.5 | 1450 | 30.71 | 4.97 |
| 144 | 125 | FGD-spheres | poraver large | 7 | 1654 | 44.60 | 6.14 |
| 145 | 125 | FGD-spheres | poraver large | 14.4 | 1640 | 62.42 | 9.75 |
| 150 | 110 | FGD-spheres | poraver small | 22 | 1478 | 36.24 | 5.49 |
| 151 | 110 | FGD-spheres | Poraver small | 18 | 1486 | 34.14 | 4.41 |
| 152 | 125 | FGD-spheres | Poraver small | 22 | 1640 | 80.58 | 12.06 |
| 153 | 125 | FGD-spheres | Poraver small | 18 | 1655 | 63.09 | 9.85 |

## Claims

1. Compacted gypsum product having a density of less than 1800 kg/m³.

2. Compacted gypsum product according to claim 1, which has a density of less than 1700 kg/m³, preferably of less than 1650 kg/m³.

3. Process for preparing a compacted gypsum product, which process comprises preparing a mixture comprising raw gypsum and an aggregate material having a lower density than said compacted raw gypsum, followed by compacting said mixture.

4. Process according to claim 3, wherein said aggregate material has a density that is less than compacted gypsum.

5. Process according to claim 3 or 4, wherein said aggregate material is selected from expanded clay (laterlite), pumice, open porous synthetic expanded glass, and combinations thereof.

6. Process according to any of the claims 3-5, wherein said aggregate material is present in said mixture in an amount of 5 to 30 wt.%, preferably 7-25 wt.%, more preferably 8-22 wt.%.

7. Process according to any of the claims 3-6 wherein said compaction is carried out at a pressure in the range of 1-40 MPa.

8. Compacted gypsum product obtainable by the process of any of the previous claims 3-7.

9. Use of a compacted gypsum product according to claims 1-2 or 8 in construction, preferably in the construction of non load-bearing structures.
